# EUROPEAN PATENT SPECIFICATION

(11) **EP 1 728 588 B1**
(45) Date of publication and mention of the grant of the patent: **25.07.2007**
(21) Application number: 06114639.5
(22) Date of filing: 29.05.2006
(51) Int. Cl.: B23Q 11/08

(54) **Covering and protective device for machines and systems**
Abdeck- und Schutzvorrichtung für Maschinen und Systeme
Dispositif de protection et de recouvrement pour machines et pour systèmes

(30) Priority: 31.05.2005 IT BO20050377
(43) Date of publication of application: 06.12.2006
(73) Proprietor: P.E.I. Protezioni Elaborazioni Industriali S.r.l., 40012 Calderara di Reno (Bologna) (IT)
(72) Inventor: Tabellini, Giorgio, 40037 Sasso Marconi (Bologna) (IT); Bissolo, Fulvio, 39055 Laives (Bolzano) (IT)
(74) Representative: Lanzoni, Luciano

(56) References cited:
- EP-A- 0 963 809
- DE-A1- 10 109 134
- DE-U1- 20 219 799

## Description

The present invention relates to a covering and protective device for machines and systems.

The covering and protective device according to the present invention is of the type comprising a plurality of covering elements, which are slidably connected to one another, one after another, to form at least one mantle designed to cover and protect an open zone of a machine or system in which there are guides along which a machining part is linearly and alternately mobile. Mantles of this type are mainly used to cover and protect the guides of automatic machinery, machine tools or robotised systems, to prevent foreign bodies, such as dirt, shavings, machining dusts or emulsions, from infiltrating between the guides and compromising their correct operation.

In general, in the succession of covering elements one end covering element is fixed to a static structure of the machine or system, whilst the other end covering element is fixed to the machining part, tracking its linear and alternating movement.

In mantles of the known type, after movement of the machining part along the guides, each covering element is gradually moved into contact with the end of stroke flanges of the others, performing a mutual cascade drawing operation which causes them to be moved towards or away from one another.

This type of cascade drawing of the covering elements imposes a speed limit on the machining part beyond which the contact impacts between the covering elements would produce an intolerable level of noise, in addition to harmful intermittent stress on the entire machine or system.

To dampen the impacts various types of shock absorbers were proposed, inserted between the covering elements. However, even shock absorbers with the best damping capacity accumulate part of the kinetic energy accompanying the movement of each covering element, and return said energy in an uncontrolled fashion, inducing in the covering elements themselves and therefore in the machining part, vibrations or oscillations relative to the desired positioning point, with consequent possible errors in machining or the execution of operations.

This phenomenon occurs above all when using machining parts and mantles with a relatively high mass and/or at high machining part movement speeds. The aim of the present invention is to produce a covering and protective device for machines and systems which is free of the above-mentioned disadvantages.

Accordingly, the present invention provides a covering and protective device for machines and systems with the characteristics described in one or more of the claims herein.

The present invention is now described, by way of example and without limiting the scope of application, with reference to the accompanying drawings, in which:
- Figures 1 and 2 show a first embodiment of the covering and protective device in accordance with the present invention in two respective operating positions;
- Figure 3 is a cross-section according to line III
- III from Figure 2;
- Figure 4 is a perspective view, with some parts transparent, of a portion of what is illustrated in Figure 2;
- Figures 5 and 6 are two perspective views of a second embodiment of the covering and protective device in accordance with the present invention;
- Figure 7 is a transparent enlarged detail from Figure 5;
- Figures 8 and 9 are two perspective views of a third embodiment of the covering and protective device in accordance with the present invention;
- Figure 10 is a transparent enlarged detail from Figure 8; and
- Figure 11 is an enlarged detail from Figure 9;
- Figure 12 is an enlarged view of a first embodiment of a detail from Figures 3 and 4;
- Figures 13 and 14 respectively show two alternative embodiments of the detail from Figure 12.

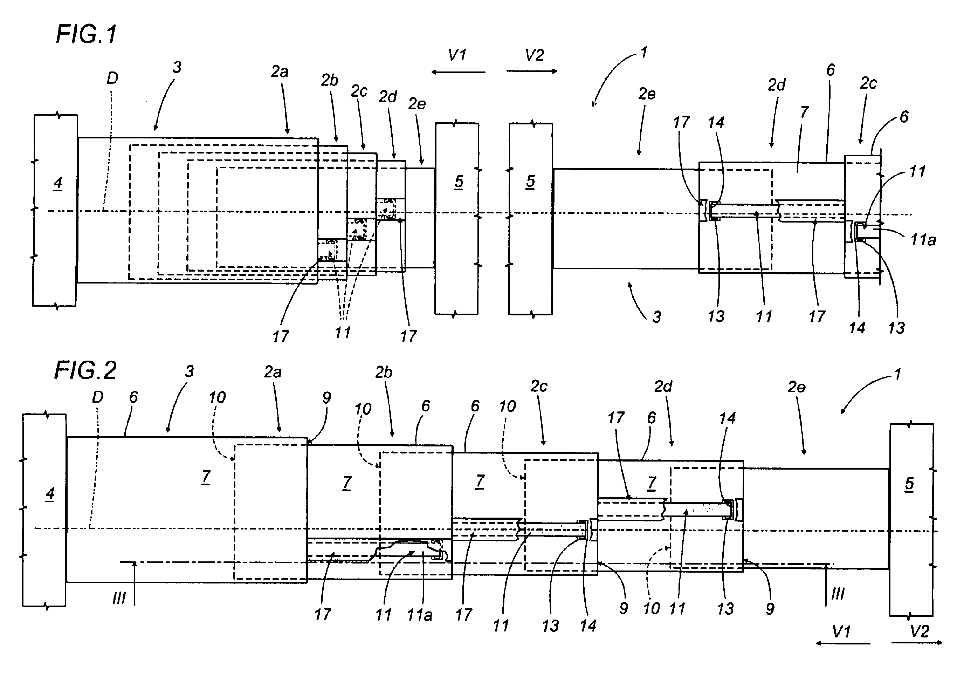

In Figures 1 to 4 the numeral 1 denotes as a whole a covering and protective device for machines and systems.

The device 1 comprises a first plurality of box-shaped covering elements 2a - 2e, which are slidably connected to one another in a sealed fashion to form a first telescopic covering and protective mantle 3 designed to cover and protect from foreign bodies such as dirt, shavings, machining dusts or emulsions, the guides of automatic machinery, machine tools or robotised systems, along which a machining part is linearly and alternately mobile.

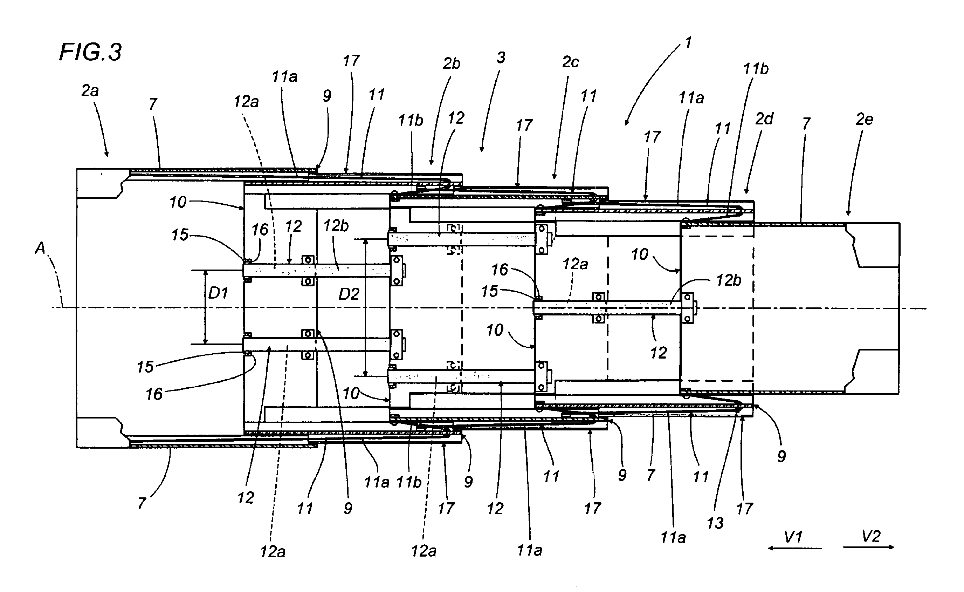

In operating conditions, as illustrated in Figures 1 and 2, a first end box-shaped element 2a of the telescopic mantle 3 is fixed in a sealed fashion to a fixed part 4 of a machine or system, whilst the other end box-shaped element 2e is fixed in a sealed fashion to a mobile part 5 of the machine or system, in particular to a machining part 5, tracking its linear and alternating movement along a direction D.

With the exception of box-shaped elements 2a, 2e at the ends of the telescopic mantle 3, each intermediate box-shaped element 2b - 2d is next to another two box-shaped elements, respectively larger than and smaller than itself. Therefore the box-shaped elements 2a - 2e can slide inside one another in the direction D, both according to a direction V1 and according to the opposite direction V2, with a telescopic movement between a maximum extension, or open position, and a maximum contraction and minimum dimensions, or closed position.

As illustrated in Figure 1, the device 1 also comprises a second plurality of box-shaped elements 2a - 2e, slidably connected to one another in a sealed fashion to form a second telescopic mantle 3, similar to the one described above and positioned symmetrically to the latter relative to the machining part 5. In this way, after movement of the machining part 5, the shortening of one telescopic mantle 3 corresponds to complementary extension of the other telescopic mantle 3.

The box-shaped elements 2a - 2e are preferably made of steel and each has a substantially tubular and prismatic shape.

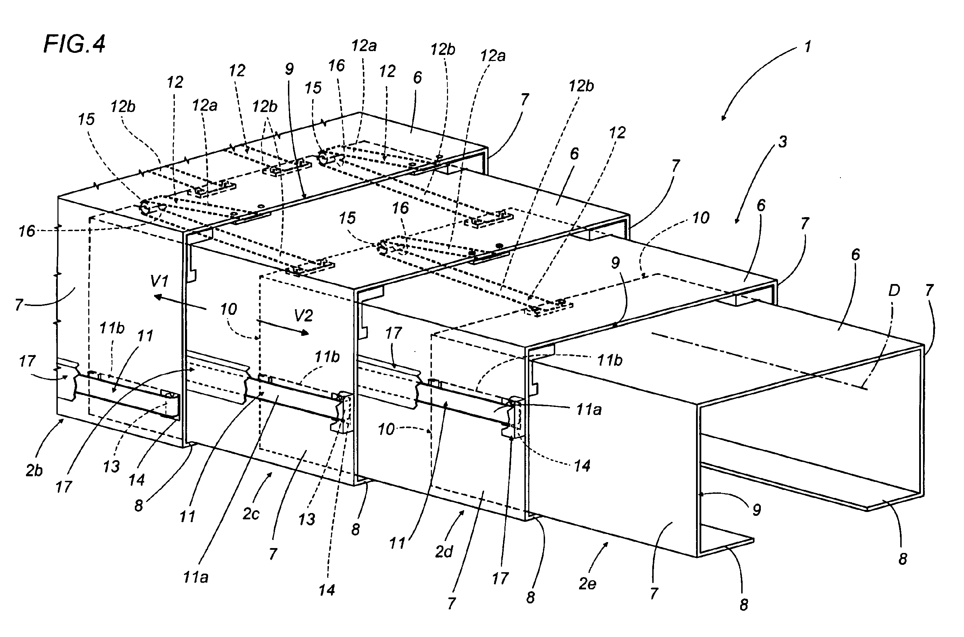

As is better illustrated in Figure 4, each box-shaped element 2a - 2e has a larger wall 6, from which two sides 7 extend in the same direction, combining to form a U-shape. From each side 7, opposite the wall 6, a smaller wall 8 extends inwards in an L-shape. The two walls 8 lie in the same plane and are opposite to and distanced from one another so that they can be placed alongside the guide to be protected, with one on the right and one on the left.

In particular, the walls 6 and 8 are flat and parallel with one another, and the sides 7 are flat, parallel with one another and at right angles to the walls 6 and 8.

With reference to the above-mentioned direction V2, each box-shaped element 2a - 2e is delimited at the front by an edge 9, and at the rear by an edge 10. The edges 9 and 10 form respective profiles 9 and 10, both C-shaped.

Close to the front edge 9 of each box-shaped element 2a - 2e there is a scraper device, of the known type and not illustrated, which guarantees the above-mentioned sealed connection between the box-shaped elements.

The telescopic movement of the box-shaped elements 2a - 2e is guaranteed, in direction V1, by a first set of interconnecting belts 11, and in direction V2, by a second set of interconnecting belts 12.

Starting with the first box-shaped element 2a, fixed close to the front edge 9 of each of the two sides 7 of the element is the first end of a belt 11, extending forward, with a branch 11a, to wrap around the corresponding side 7 of the second box-shaped element 2b, at or close to the front edge 9 of the latter. From here each belt 11 extends backward, with a branch 11b, to the point where its second end is fixed to the corresponding side 7 of the third box-shaped element 2c, close to the rear edge 10 of the latter. The branch 11a of each belt 11 extends outside the second box-shaped element 2b, and therefore outside the mantle 3, whilst the branch 11b extends inside the hollow space formed by the second box-shaped element 2b and the third box-shaped element 2c.

Similarly, fixed close to the relative front edge 9 of each of the two sides 7 of the second box-shaped element 2b is the first end of a belt 11, extending forward, with a branch 11a, to wrap around the corresponding side 7 of the third box-shaped element 2c, at or close to the front edge 9 of the latter. From here each belt 11 extends backward, with a branch 11b, to the point where its second end is fixed to the corresponding side 7 of the fourth box-shaped element 2d, close to the rear edge 10 of the latter. The branch 11a of each belt 11 extends outside the third box-shaped element 2c, and therefore outside the mantle 3, whilst the branch 11b extends inside the hollow space formed by the third box-shaped element 2c and the fourth box-shaped element 2d.

Similarly, fixed close to the relative front edge 9 of each of the two sides 7 of the third box-shaped element 2c is the first end of a belt 11, extending forward, with a branch 11a, to wrap around the corresponding side 7 of the fourth box-shaped element 2d, at or close to the front edge 9 of the latter. From here each belt 11 extends backward, with a branch 11b, to the point where its second end is fixed to the corresponding side 7 of the fifth box-shaped element 2e, close to the rear edge 10 of the latter. The branch 11a of each belt 11 extends outside the fourth box-shaped element 2d, and therefore outside the mantle 3, whilst the branch 11b extends inside the hollow space formed by the fourth box-shaped element 2d and the fifth box-shaped element 2e.

The branches 11a and 11b of each belt 11 overlap to form a "U" shape and are separated by a section in which the belt 11 is wrapped around a return pulley 13 idly mounted on the side 7 of the corresponding box-shaped element 2b - 2d, at or close to the front edge 9 of the latter.

Each pulley 13 is preferably housed in a slot 14 made in the side 7 of the corresponding box-shaped element 2b - 2d close to the front edge 9 of the latter.

The branches 11a are protected by suitable U-shaped raceways 17 fixed to the sides 7 of the box-shaped elements 2b - 2d. It should be noticed that, if such protective raceways 17 are present, the ends of the belts 11 are both fixed at the rear edges 10 of the first box-shaped element considered and of the third box-shaped element considered.

It should be noticed that the belts 11 are offset from one another, having a different position for each box-shaped element. In particular, starting with the first box-shaped element 2a towards the last box-shaped element 2e, the first ends of the belts 11 are fixed to the respective sides 7 in positions increasingly close to the larger wall 6. In this way, after telescopic movement of the mantle 3 towards its closed position, the pulleys 13 cannot interfere with one another.

Obviously, in alternative embodiments not illustrated there may be a respective number n of belts 11 fixed to the same side 7, where n is an integer and is greater than or equal to 1.

Starting with the first box-shaped element 2a, fixed to the larger wall 6 of the latter, close to the relative front edge 9, are the first ends of two belts 12, extending backward, with branches 12a, to wrap around the larger wall 6 of the second box-shaped element 2b, at or close to the rear edge 10 of the latter. From here each belt 12 extends forward, with a branch 12b, to the point where its second end is fixed to the larger wall 6 of the third box-shaped element 2c, close to the rear edge 10 of the latter. The branch 12a of each belt 12 extends inside the hollow space formed by the first box-shaped element 2a and the second box-shaped element 2b, whilst the branch 12b extends inside the second box-shaped element 2b and therefore inside the mantle 3.

Similarly, fixed to the larger wall 6 of the second box-shaped element 2b, close to the relative front edge 9, are the first ends of two belts 12, extending backward, with branches 12a, to wrap around the larger wall 6 of the third box-shaped element 2c, at or close to the rear edge 10 of the latter. From here each belt 12 extends forward, with a branch 12b, to the point where its second end is fixed to the larger wall 6 of the fourth box-shaped element 2d, close to the rear edge 10 of the latter. The branch 12a of each belt 12 extends inside the hollow space formed by the second box-shaped element 2b and the third box-shaped element 2c, whilst the branch 12b extends inside the third box-shaped element 2c and therefore inside the mantle 3.

Similarly, fixed to the larger wall 6 of the third box-shaped element 2c, close to the relative front edge 9, is the first end of a belt 12, extending backward, with a branch 12a, to wrap around the larger wall 6 of the fourth box-shaped element 2d, at or close to the rear edge 10 of the latter. From here the belt 12 extends forward, with a branch 12b, to the point where its second end is fixed to the larger wall 6 of the fifth box-shaped element 2e, close to the rear edge 10 of the latter. The branch 12a of the belt 12 extends inside the hollow space formed by the third box-shaped element 2c and the fourth box-shaped element 2d, whilst the branch 12b extends inside the fourth box-shaped element 2d and therefore inside the mantle 3.

Obviously, in an alternative embodiment, two belts 12 may be fixed to the larger wall 6 of the third box-shaped element 2c, as is the case for the first box-shaped element 2a and the second box-shaped element 2b.

The branches 12a and 12b of each belt 12 overlap to form a "U" shape and are separated by a section in which the belt 12 is wrapped around a return pulley 15 idly mounted on the larger wall 6 of the corresponding box-shaped element 2b - 2d, at or close to the rear edge 10 of the latter.

Each pulley 15 is preferably housed in a seat 16 made in the larger wall 6 of the corresponding box-shaped element 2b - 2d along the rear edge 10 of the latter.

It should be noticed that the belts 12 are offset from one another, having a different position for each box-shaped element. In particular, with reference to a plane A at a right angle to the walls 6 and in the middle of the walls 6 (Figure 3), the belts 12 which wrap around the box-shaped element 2b are positioned symmetrically relative to the plane A, from which they are separated by a predetermined distance d1, the belts 12 which wrap around the box-shaped element 2c are positioned symmetrically relative to the plane A, from which they are separated by a distance d2 greater than the distance d1, and the belt 12 which wraps around the box-shaped element 2d is positioned astride the plane A, that is to say centrally on the wall 6 of the box-shaped element 2d. In this way, after telescopic movement of the mantle 3 towards its closed position, the pulleys 15 cannot interfere with one another.

Again, obviously, in alternative embodiments not illustrated there may be a respective number m of belts 12 fixed to the same larger wall 6, where m is an integer and is greater than or equal to 1.

With reference to both the plurality of belts 11 and the plurality of belts 12, the extension and/or shortening of the telescopic mantle 3 are therefore guaranteed by the fact that, with reference to the direction V2 of extension of the telescopic mantle 3, in one, and preferably each, consecutive set of three box-shaped elements 2a - 2e, the front edge 9 of the rear box-shaped element and the rear edge 10 of the front box-shaped element are directly connected by belts 11 and/or by belts 12 which wrap around the intermediate box-shaped element at or close to a front edge 9 and/or respectively a rear edge 10 of the latter.

Device 1 operation is described below, for brevity, with reference to only one of the two telescopic mantles 3.

After movement of the box-shaped element 2e in the direction V1, driven directly by the machining part 5, the belts 11 are subjected to traction and push the pulleys 13, and therefore the relative box-shaped elements 2b - 2d, in the direction V1, causing the telescopic mantle 3 to close, that is to say, to be shortened. Vice versa, after movement of the box-shaped element 2e in the direction V2, driven directly by the machining part 5, the belts 12 are subjected to traction and push the pulleys 15, and therefore the relative box-shaped elements 2b - 2d, in the direction V2, causing the telescopic mantle 3 to open, that is to say, to be extended. Therefore, in both cases the box-shaped elements 2b - 2d are subjected to a pushing action. To avoid possible slipping between the belts 11 and the pulleys 13, both the belts 11 and the pulleys 13 can be fitted with teeth by means of which they mesh with one another.

Similarly, to avoid possible slipping between the belts 12 and the pulleys 15, both the belts 12 and the pulleys 15 can be fitted with teeth by means of which they mesh with one another.

Obviously, according to alternative embodiments, the belts 11 and/or the belts 12 may be substituted by equivalent flexible, inextensible connecting means, for example chains. In such a case it is clearly preferable that gear wheels are used as the return elements in place of the pulleys 13 and 15.

According to another alternative embodiment, not illustrated, the pulleys 13 and/or the pulleys 15 may be substituted by respective lubricated return shoes on which the respective belts 11, 12 can slide with minimum wear.

In any case, the reciprocal sliding of the box-shaped elements 2a - 2e is promoted by bearings of the known type and not illustrated.

It is also important to emphasise that, although in the example illustrated each telescopic mantle 3 consists of five box-shaped elements 2a - 2e, without departing from the inventive concept each telescopic mantle 3 may consist of a generic number k of box-shaped elements, where k is an integer and is greater than or equal to 1.

As already indicated, the telescopic movement of each mantle 3 is driven, in the direction V1, by respective belts 11, and, in the direction V2, by respective belts 12. It must be emphasised that the mantles 3 described above, and illustrated in Figure 1, are independent of one another, but, in an alternative embodiment not illustrated, they may be connected to one another, in a bridge configuration symmetrical relative to the machining part 5, so that each mobile box-shaped element 2b - 2e of one mantle 3 is integral with the corresponding mobile box-shaped element 2b - 2e of the other mantle 3. By way of example, the sides 7 of one box-shaped element 2b may be fixed, by a pair of first rigid connecting bridges, to the corresponding sides 7 of the other box-shaped element 2b; the sides 7 of one box-shaped element 2c may be fixed, by a pair of second rigid connecting bridges, to the corresponding sides 7 of the other box-shaped element 2c; the sides 7 of one box-shaped 2d may be fixed, by a pair third rigid connecting bridges, to the corresponding sides 7 of the other box-shaped element 2d; and the sides 7 of one box-shaped element 2e may be fixed, by a pair of fourth rigid connecting bridges, to the corresponding sides 7 of the other box-shaped element 2e. In this case it is evident that in each mantle 3 the belts 11 are redundant relative to the belts 12 or vice versa. Considering the case in which both mantles 3 only have the belts 11 present, the telescopic movement of each mantle 3 in the direction V2 is derived from the telescopic movement of the other mantle 3 in the direction V1 by means of the above-mentioned connecting bridges. Similarly, considering the case in which both mantles 3 only have the belts 12 present, the telescopic movement of each mantle 3 in the direction V1 is derived from the telescopic movement of the other mantle 3 in the direction V2 by means of the above-mentioned connecting bridges. The latter case is clearly preferably, since the belts 12, unlike the belts 11, do not need the above-mentioned protective raceways 17.

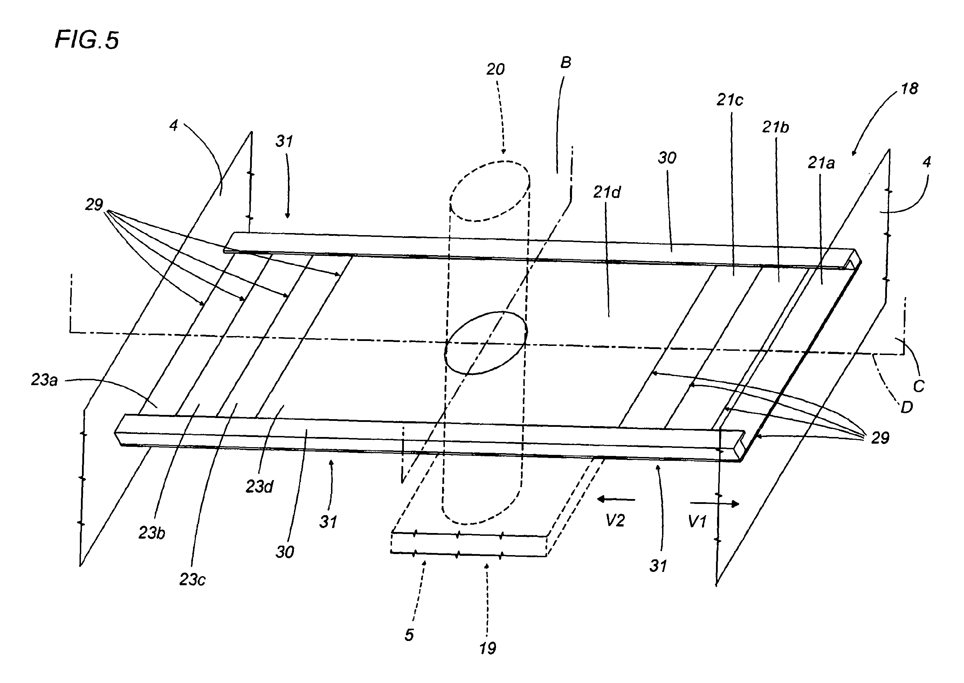

In Figures 5 to 7 the numeral 18 denotes as a whole a different covering and protective device for machines and systems, also made in accordance with the present invention.

Similarly to the device 1 described above, the device 18 can be connected to a machining part 5 to track its outward and return movements along a direction D, keeping the relative sliding guides (non illustrated) covered and protected from foreign bodies such as dirt, shavings, machining dusts or emulsions.

The machining part 5, only schematically illustrated in Figure 5 since it is not part of the subject matter of the present invention, has a rear 19, slidably connected to the above-mentioned sliding guides, and a machining front 20, on the opposite side to the rear 19 relative to the device 18.

The device 18 comprises a plurality of covering elements, slidably connected to one another in a sealed fashion, consisting of a first covering element 21a, which can be fixed to a fixed part 4 of the machine or system to which the machining part 5 belongs, and a plurality of additional covering elements 21b, 21c, 21d, mobile relative to one another and relative to the element 21a according to the above-mentioned direction of movement D of the machining part 5. In particular, the element 21b is the closest to the element 21a, whilst the element 21d is the furthest from the element 21a and is designed to be engaged and drawn by the machining part 5 in the movement of the latter along direction D.

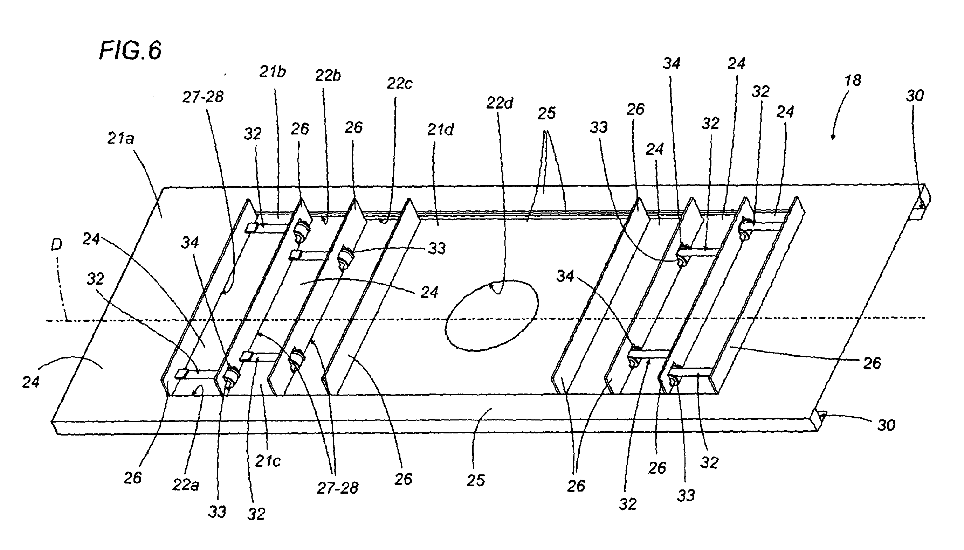

As is more clearly illustrated in Figure 6, each covering element 21a - 21d has a respective opening 22a - 22d for the passage of the machining part 5 across the device 18.

The opening 22a of the element 21a forms an area to be covered by the mobile covering elements 21b, 21c, 21d in their various operating positions consequent to movement of the machining part 5 along direction D.

The openings 22a, 22b, 22c are rectangular and all have the same smaller dimension according to a direction at a right angle to direction D, whilst the openings 22b and 22c have, according to direction D, a dimension less than that of the opening 22a. In particular, the openings 22b and 22c have, according to direction D, decreasing dimensions, from the mobile covering element 21b closest to the element 21a to the mobile covering element 21c furthest from the element 21a.

In contrast, the opening 22d of the element 21d is a central circular opening having a diameter less than the smaller dimension of the openings 22a, 22b, 22c.

The covering elements 21a - 21d are made of metal, for example steel, and comprise respective covering panels 23a - 23d, which consist of rectangular flat plates, relatively thin and all having the same thickness. Moreover, with the exception of panel 23a, the panels 23a - 23d all have the same width, that is to say the same smaller dimension according to a direction which is at a right angle to direction D.

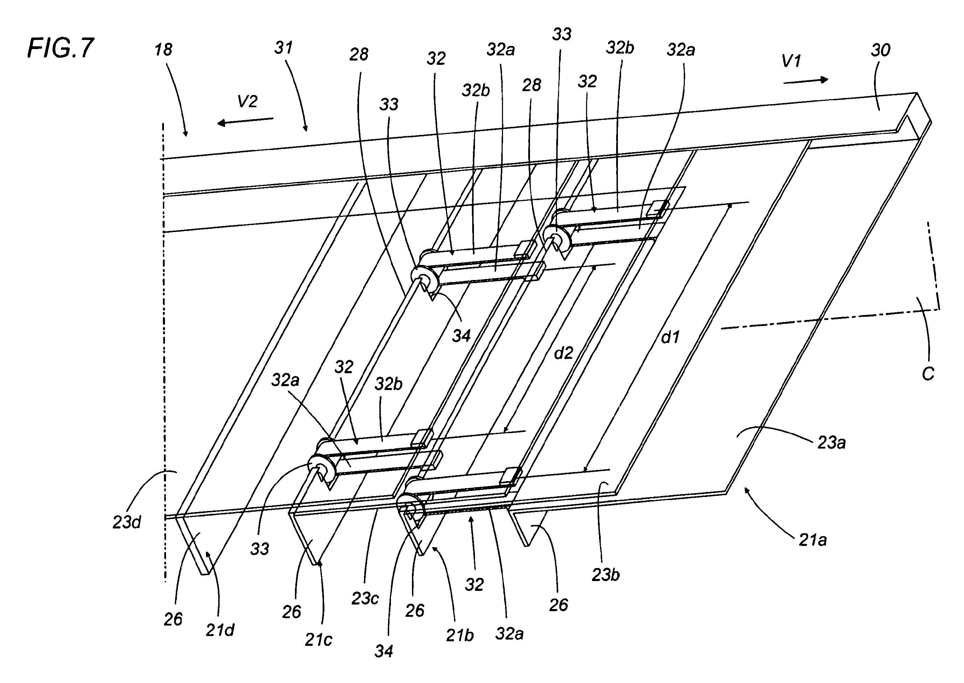

As is better illustrated in Figure 7, panel 23d overlaps panel 23c, which overlaps panel 23b which, in turn, overlaps panel 23a.

Covering panels 23a - 23d are connected to one another, in a direction at a right angle to them, by two tracks 30, formed by respective L-shaped section bars and fixed to the panel 23a, on the front 20 side, along the side bands of the panel 23a which project from the zone in which the latter overlaps with the adjacent panel 23b.

The panel 23a has, according to direction D, a greater length than the panels 23b, 23c, 23d, and the latter have, again according to direction D, decreasing lengths, from the mobile covering element 21b closest to the element 21a to the mobile covering element 21d furthest from the element 21a.

As is illustrated more clearly in Figure 6, each of the panels 23a - 23c has two sheets 24, extending transversally to direction D, distanced from one another along direction D and connected to one another by two longitudinal bridges 25 surrounding and forming, together with the sheets 24, the respective rectangular openings 22a, 22b, 22c.

Each of the covering elements 21a - 21c comprises two flat rectangular tabs 26, extending at right angles from the respective sheets 24 on the rear 19 side of the machining part 5 and coinciding with opposite edges 27 of the relative openings 22a - 22c, along the entire length of the edges 27. The edges 27 form respective straight profiles 28 of the panels 23a - 23c which transversally connect the bridges 25.

The covering element 21d also has two flat rectangular tabs 26, parallel with the tabs 26 of the covering elements 21a - 21c, extending at right angles from the panel 23d on the rear 19 side of the machining part 5 and positioned symmetrically on opposite sides of the opening 22d relative to direction D.

As is more clearly illustrated in Figure 5, along direction D the covering elements 21a - 21d are delimited by respective straight profiles 29, formed by end edges of the panels 23a - 23d, transversal to direction D.

Close to the two profiles 29 of each covering element 21b - 21d there is a scraper device, of the known type and not illustrated, which guarantees the above-mentioned sealed connection between the covering elements 21a - 21d.

The device 18 has a plane of symmetry B at a right angle to the panels 23a - 23d and to direction D. On each of the two sides of the plane B, the set of panels 23a - 23d forms a covering and protective mantle 31 which can be extended and shortened in direction D.

The two mantles 31 are adjacent to one another and connected in a bridge configuration symmetrical relative to the machining part 5 by the panel 23d and the bridges 25, in such a way that, after movement of the machining part 5, shortening of one mantle 31 in direction D corresponds to complementary extension of the other mantle 31, again in direction D.

In the following description reference is made to only one of the mantles 31, for which reference character V1 is used to label the direction in which the mantle 31 is shortened in direction D and V2 for the direction in which the mantle 31 is extended in direction D.

Relative to direction V2 the above-mentioned profiles 28 constitute front profiles for the covering elements 21a - 21c, whilst the profiles 29 constitute rear profiles for the covering elements 21a - 21d. It should be noticed that, in this context, a semi-circular half of the edge which delimits the opening 22d similarly forms a front profile 28 of the covering element 21d.

Movement of the covering elements 21b - 21d relative to the covering element 21a is guaranteed, in direction V1, by a set of interconnecting belts 32, and in direction V2, by the set of belts 32 connected to the other mantle 31.

As is illustrated more clearly in Figure 7, starting with the first covering element 21a, fixed to the front profile 28 of the latter are the first ends of two belts 32, extending forward, that is to say according to direction V2, with branches 32a, until they wrap around the second covering element 21b close to its front profile 28. From here each belt 32 extends backward, that is to say according to direction V1, with a branch 32b, to the point where its second end is fixed to the rear profile 29 of the third covering element 21c. Both of the branches 32a and 32b of each belt 32 extend on the side where the mantle 31 faces the rear 19 of the machining part 5, specifically, the branch 32a is opposite the rear 19 and extends between the tabs 26, which are opposite one another, of the covering elements 21a and 21b, whilst the branch 32b extends inside the hollow space formed by the panels 23b and 23c, which overlap one another.

The branches 32a and 32b of each belt 32 overlap to form a "U" shape and are separated by a section in which the belt 32 is wrapped around a return pulley 33 idly mounted on the covering element 21b, close to the front profile 28 of the latter.

Each pulley 33 is preferably housed in a seat 34 made in the tab 26 of the covering element 21b adjacent to the front profile 28 of the latter.

Similarly, fixed to the profile 28 of the second covering element 21b are the first ends of two belts 32, extending forward, that is to say according to direction V2, with branches 32a, until they wrap around the third covering element 21c close to its front profile 28. From here each belt 32 extends backward, that is to say according to direction V1, with a branch 32b, to the point where its second end is fixed to the rear profile 29 of the fourth covering element 21d. Both of the branches 32a and 32b of each belt 32 extend on the side where the mantle 31 faces the rear 19 of the machining part 5, specifically, the branch 32a is opposite the rear 19 and extends between the tabs 26, which are opposite one another, of the covering elements 21b and 21c, whilst the branch 32b extends inside the hollow space formed by the panels 23c and 23d, which overlap one another.

The branches 32a and 32b of each belt 32 overlap to form a "U" shape and are separated by a section in which the belt 32 is wrapped around a return pulley 33 idly mounted on the covering element 21c, close to the front profile 28 of the latter.

Again, each pulley 33 is preferably housed in a seat 34 made in the tab 26 of the covering element 21c in a position adjacent to the front profile 28 of the latter.

It should be noticed how the pairs of belts 32 are suitably offset from one another. In particular, with reference to a plane C at a right angle to the panels 23a - 23d and to the plane B, and in the middle of the panels 23a - 23d, the belts 32 which wrap around the covering element 21b are positioned symmetrically relative to the plane C, from which they are separated by a predetermined distance e1, and the belts 32 which wrap around the covering element 21c are positioned symmetrically relative to the plane C, from which they are separated by a distance e2 smaller than the distance d1. In this way, after movement of the mantle 31 towards its closed position, the pulleys 33 cannot interfere with one another.

Obviously, in alternative embodiments not illustrated there may be a respective number n of belts 32 fixed to the same pair of profiles 28 and 29, where n is an integer and is greater than or equal to 1.

Device 18 operation is described below initially with reference to only one of the two mantles 31.

After movement of the covering element 21d in direction V1, driven directly by the machining part 5, the belts 32 are subjected to traction and push the pulleys 33, and therefore the relative covering elements 21b - 21c, in direction V1, causing the mantle 31 to close, that is to say, to be shortened. Since the two mantles 31 are, as already indicated, connected to one another in a bridge configuration symmetrical relative to the machining part 5, the above-mentioned active shortening of the mantle 31 causes the complementary passive extension of the other mantle 31, in which the relative belts 32 are not operative.

Obviously, the passage from the active status to the passive status and vice versa for each of the two mantles 31 derives from the change in the direction in which the machining part 5 moves along direction D.

Again, to avoid possible slipping between the belts 32 and the pulleys 33, both the belts 32 and the pulleys 33 can be fitted with teeth by means of which they mesh with one another.

Obviously, according to an alternative embodiment, the belts 32 may be substituted by equivalent flexible, inextensible connecting means, for example chains. In such a case it is clearly preferable that gear wheels are used as the return elements in place of the pulleys 33.

According to another alternative embodiment, not illustrated, the pulleys 33 may be substituted by respective lubricated return shoes on which the respective belts 32 can slide with minimum wear.

In any case, the reciprocal sliding of the covering elements 21a - 21d is promoted by bearings of the known type and not illustrated.

It is also important to emphasise that, although in the example illustrated the device 18 comprises four covering elements 21a - 21d, without departing from the inventive concept the device 18 may comprise a generic number k of covering elements, where k is an integer and is greater than or equal to 1.

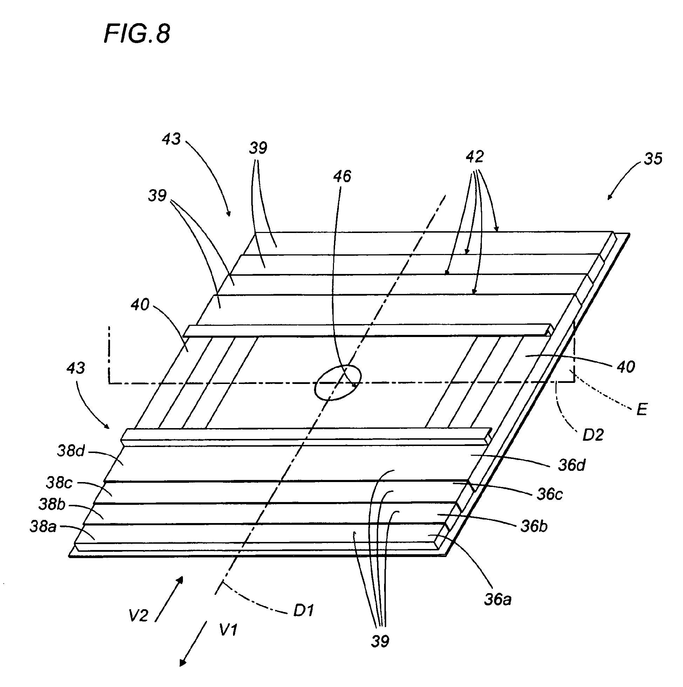

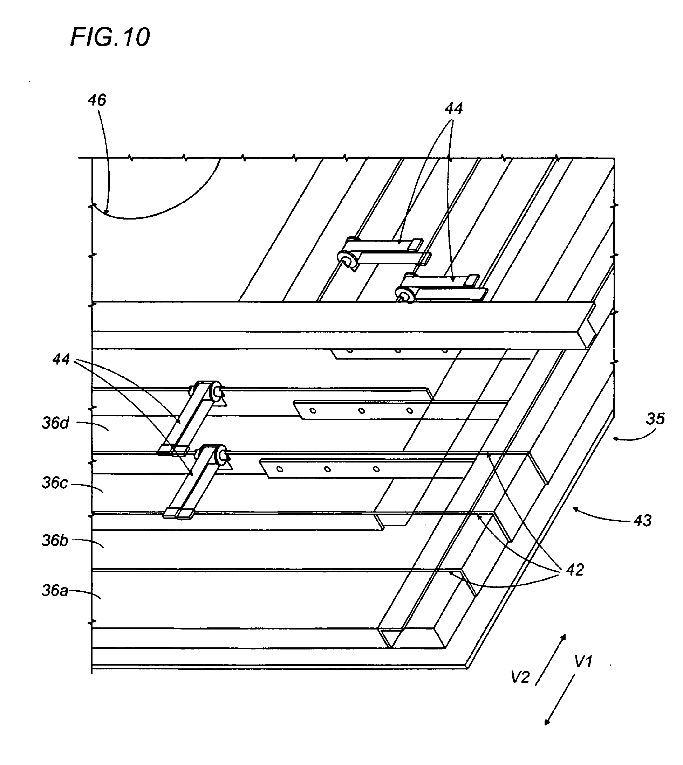

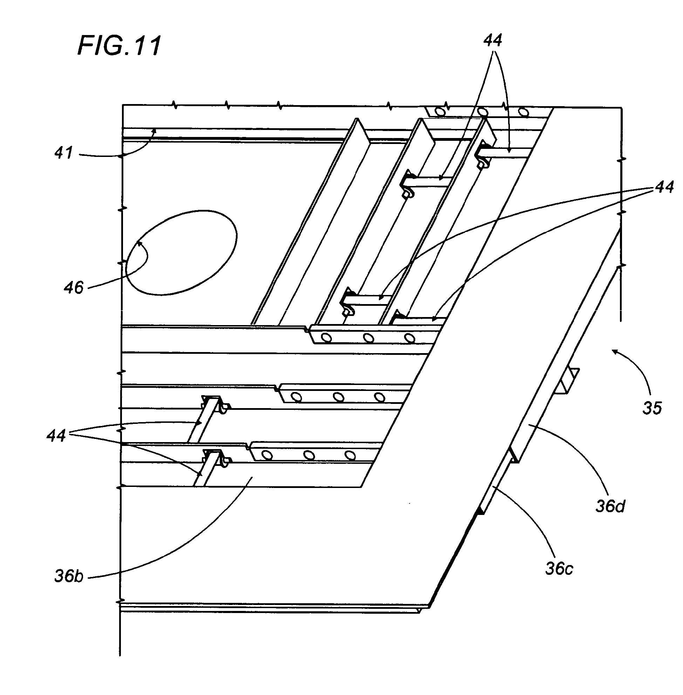

In Figures 8 to 11 the numeral 35 denotes as a whole another covering and protective device for machines and systems, also made in accordance with the present invention.

The device 35 can be connected to a machining part (not illustrated) to track its flat outward and return movements along two directions D1 and D2 at right angles to one another, keeping the relative sliding guides (non illustrated) covered and protected from foreign bodies such as dirt, shavings, machining dusts or emulsions.

Again, the machining part has a rear, slidably connected to the above-mentioned sliding guides, and a machining front, on the opposite side to the rear relative to the device 35.

The device 35 comprises a first set of covering elements, slidably connected to one another in a sealed fashion, consisting of a first covering element 36a, which can be fixed to a fixed part of the machine or system to which the machining part belongs, and a plurality of additional covering elements 36b, 36c, 36d, mobile relative to one another and relative to the element 36a according to the above-mentioned direction of movement D1 of the machining part. In particular, the element 36b is the closest to the element 36a, whilst the element 36d is the furthest from the element 36a and is designed to be drawn by the machining part in the movement of the latter along direction D1.

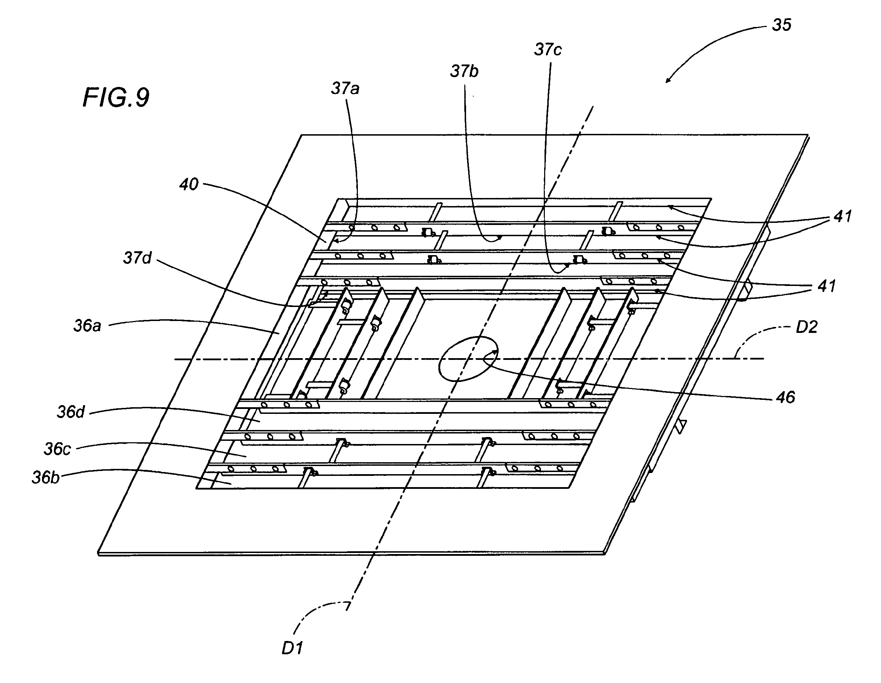

As is more clearly illustrated in Figure 9, each covering element 36a - 36d has a respective opening 37a - 37d for the passage of the machining part across the device 35.

The opening 37a of the element 36a forms an area to be covered by the mobile covering elements 36b, 36c, 36d in their various operating positions consequent to movement of the machining part along direction D1.

The openings 37a - 37d are rectangular and all have the same dimension according to direction D2, whilst the openings 37b - 37d have, according to direction D1, a dimension less than that of the opening 37a. In particular, the openings 37b - 37d have, according to direction D1, decreasing dimensions, from the mobile covering element 36b closest to the element 36a to the mobile covering element 36d furthest from the element 36a.

The covering elements 36a - 36d are made of metal, for example steel, and comprise respective covering panels 38a - 38d, consisting of rectangular flat plates, relatively thin and all having the same thickness. Panel 38d overlaps panel 38c, which overlaps panel 38b which, in turn, overlaps panel 38a.

The covering panels 38a - 38d are connected to one another in a direction at a right angle to them, in a known way not illustrated in detail.

The panel 38a has, according to direction D1, a greater length than the panels 38b, 38c and 38d, and the latter have, again according to direction D1, decreasing lengths, from the mobile covering element 36b closest to the element 36a to the mobile covering element 36d furthest from the element 36a.

Each of the panels 38a - 38d has two sheets 39, extending transversally to direction D1, distanced from one another along direction D1 and connected to one another by two longitudinal bridges 40 surrounding and forming, together with the sheets 39, the respective rectangular openings 37a - 37d.

Each of the covering elements 36a - 36d comprises two opposite edges of the relative opening 37a - 37d, forming respective straight profiles 41 of the relative panel 38a - 38d which transversally connect the bridges 40.

Along direction D1 the covering elements 36a - 36d are delimited by respective straight profiles 42, formed by end edges of the panels 38a - 38d, transversal to direction D1.

Close to the two profiles 42 of each covering element 36b - 36d there is a scraper device, of the known type and not illustrated, which guarantees the above-mentioned sealed connection between the covering elements 36a - 36d.

The device 35 has a plane of symmetry E at a right angle to the panels 38a - 38d and to direction D1. On each of the two sides of the plane E, the set of panels 38a - 38d forms a covering and protective mantle 43 which can be extended and shortened in direction D1.

The two mantles 43 are adjacent to one another and connected in a bridge configuration symmetrical relative to the machining part by the bridges 40, in such a way that, after movement of the machining part, shortening of one mantle 43 in direction D1 corresponds to complementary extension of the other mantle 43, again in direction D1.

In the following description reference is made to only one of the mantles 43, for which reference character V1 is used to label the direction in which the mantle 43 is shortened in direction D1 and V2 for the direction in which the mantle 43 is extended in direction D1.

Relative to direction V2 the above-mentioned profiles 41 constitute front profiles for the covering elements 36a - 36d, whilst the profiles 42 constitute rear profiles for the covering elements 36a - 36d.

Movement of the covering elements 36b - 36d relative to the covering element 36a is guaranteed, in direction V1, by a set of interconnecting belts 44, and in direction V2, by the set of belts 44 connected to the other mantle 43.

The connection of the covering elements 36a - 36d by the belts 44 is similar to that described above with reference to the device 18, therefore, it is not described in further detail below.

The panel 38d supports, with its face facing the front of the machining part and along the perimeter of its opening 37d, a second set of covering elements 45a - 45c shaped and assembled, to one another and on the covering element 36d, to form a covering device identical to the above-mentioned device 18. Said covering device is inserted between the mantles 43 and is angled relative to direction D1 in such a way that the covering elements 45a - 45c slide relative to one another and relative to the element 36d in direction D2.

Therefore, the covering element 45a slides in direction D2 on the covering element 36d, whilst the element 45c, which is the furthest from the covering element 36d, directly supports the machining part, in particular through a central hole 46.

Operation of the device 35 does not require any explanation, since it can immediately be deduced from that of the device 18 described above.

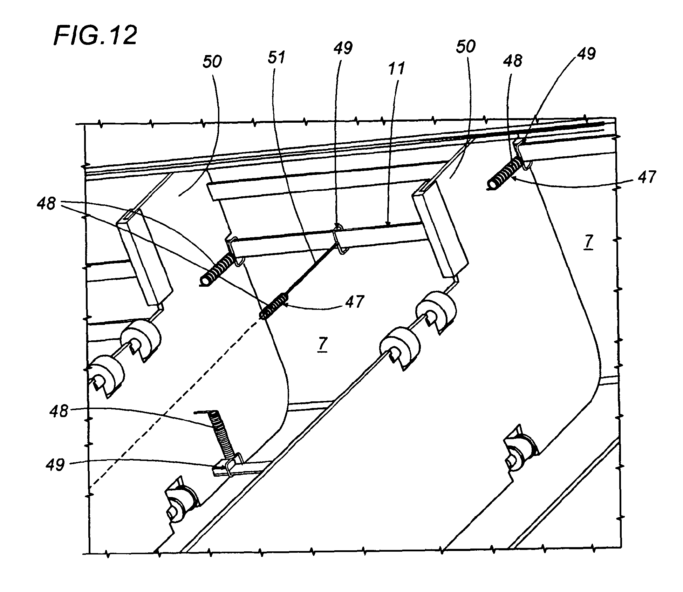

With reference to Figures 12, 13 and 14, the numeral 47 denotes as a whole tensioning means for the belts 11, which allow the belts 11 to be kept taut and during operation at a predetermined distance from the sides 7 of the covering elements 2a - 2e.

In particular, with reference to Figure 12, the tensioning means 47 comprise a spiral spring 48 at one end of which there is a slot 49 through which the belt 11 passes, whilst the other end is fixed to a point of a transversal wall 50 present for each covering element 2a - 2e. In an alternative embodiment, again illustrated in Figure 12, the spiral spring 48 may be present in an intermediate zone of a steel cable 51 connected at its ends to two opposite belts 11 by means of two slots 49.

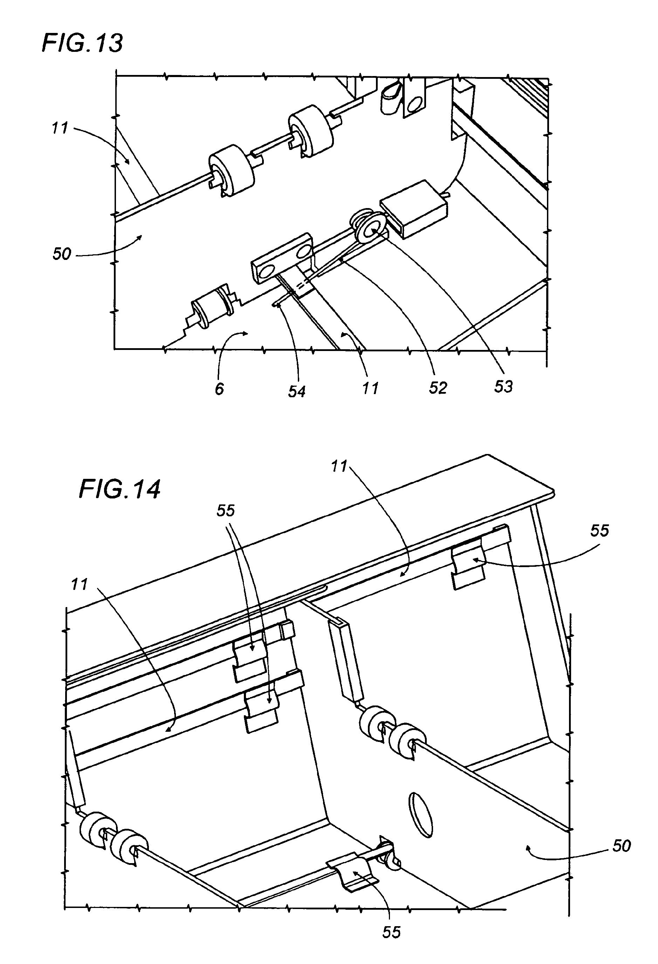

In Figure 13 the tensioning means 47 comprise a pin spring 52 wrapped around a pin 53 fixed to the transversal wall 50 and having one end 54 in contact with the belt 11 in such a way that it tensions it away from the inner face of the upper wall 6 and from the inner face of the sides 7 of each box-shaped element 2a - 2e.

Finally, in Figure 14 the tensioning means consist of spring clips 55.

## Claims

1. A covering and protective device for machines and systems, comprising at least a set of covering elements (2a - 2e; 21a - 21d; 36a - 36d, 45a - 45c) slidably connected to one another, one after another, to form at least one covering and protective mantle (3; 31; 43) which can be extended and shortened in a predetermined direction (D; D1, D2) wherein each covering element (2a - 2e; 21a - 21d; 36a - 36d, 45a - 45c), with reference to the direction of extension (V2) of the mantle (3; 31; 43), has a front profile (9; 28; 41) and a rear profile (10; 29; 42); the device (1; 18; 35) being **characterised in that,** in a set of three consecutive covering elements (2a - 2e; 21a - 21d; 36a - 36d, 45a - 45c), the rear covering element, at or close to its front profile (9; 28; 41), and the front covering element, at or close to its rear profile (10; 29; 42), are connected by flexible connecting means (11, 12; 32; 44) which wrap around the intermediate covering element at or close to at least one profile (9, 10; 28; 41) of the latter.

2. The device according to claim 1, **characterised in that,** in a set of three consecutive covering elements (2a - 2e; 21a - 21d; 36a - 36d, 45a - 45c), the front profile (9; 28; 41) of the rear covering element and the rear profile (10; 29; 42) of the front covering element are connected by first flexible connecting means (11; 32; 44) which wrap around the intermediate covering element at or close to the front profile (9; 28; 41) of the latter.

3. The device according to claim 2, **characterised in that** the first flexible connecting means (11; 32; 44) consist of at least a first belt (11; 32; 44) one end of which is fixed to the front profile (9; 28; 41) of the rear covering element, the other end being fixed to the rear profile (10; 29; 42) of the front covering element.

4. The device according to claim 2 or 3, **characterised in that** the first flexible connecting means (11; 32; 44) wrap around at least a first return element (13; 33) mounted on the intermediate covering element at or close to the front profile (9; 28; 41) of the latter.

5. The device according to any of the claims from 1 to 4, **characterised in that,** in a set of three consecutive covering elements (2a - 2e), the front profile (9) of the rear covering element and the rear profile (10) of the front covering element are connected by second flexible connecting means (12) which wrap around the intermediate covering element at or close to the rear profile (10) of the latter.

6. The device according to claim 5, **characterised in that** the second flexible connecting means (12) consist of at least a second belt (12) one end of which is fixed to the front profile (9) of the rear covering element, the other end being fixed to the rear profile (10) of the front covering element.

7. The device according to claim 5 or 6, **characterised in that** the second flexible connecting means (12) wrap around at least a second return element (15) mounted on the intermediate covering element at or close to the rear profile (10) of the latter.

8. The device according to any of the claims from 1 to 7, **characterised in that** it comprises a plurality of first covering elements (2a - 2e) slidably connected to one another, one after another, to form a first covering and protective mantle (3), and a plurality of second covering elements (2a - 2e) slidably connected to one another, one after another, to form a second covering and protective mantle (3); the first and second mantles (3, 3) being connected to one another in a symmetrical bridge configuration, in which each mobile covering element (2b - 2e) of the first mantle (3) is integral with the corresponding mobile covering element (2b - 2e) of the other mantle (3), so that shortening one mantle (3) causes complementary extension of the other mantle (3) and vice versa.

9. The device according to any of the claims from 1 to 8, wherein each covering element (2a - 2e) is a box-shaped element (2a - 2e), having a substantially tubular shape and comprising a larger wall (6) and two sides (7) which extend from the larger wall (6) in such a way that together they form a U; the box-shaped elements (2a - 2e) being connected to one another in such a way that they slide, one inside the other in a telescopic configuration, to form the covering and protective mantle (3) which can be extended and shortened in the predetermined direction (D) wherein each box-shaped element (2a - 2e), with reference to the direction (V2) of extension of the mantle (3), is delimited by a front edge (9) forming the front profile (9) and a rear edge (10) forming the rear profile (10).

10. The device according to claim 9, **characterised in that,** in the set of three consecutive covering elements (2a - 2e), fixed to each of the two sides (7) of the rear covering element, close to the relative front edge (9), is the first end of at least one first belt (11), extending forward, with a first branch (11a), until it wraps around the corresponding side (7) of the intermediate covering element, at or close to the front edge (9) of the latter; the first belt (11) extending backward, with a second branch (11b), from the side (7) of the intermediate covering element to the point where its second end is fixed to the corresponding side (7) of the front covering element, close to the rear edge (10) of the latter.

11. The device according to claim 10, **characterised in that** the first branch (11a) of each first belt (11) extends outside the intermediate covering element, whilst the second branch (11b) extends inside the hollow space formed by the intermediate covering element and the front covering element.

12. The device according to claim 11, **characterised in that** each first branch (11a) is protected by a respective raceway (17) fixed to a side (7) of a covering element.

13. The device according to claim 9, **characterised in that,** in the set of three consecutive covering elements (2a - 2e), fixed to the larger wall (6) of the rear covering element, close to the relative front edge (9), is the first end of at least one second belt (12), extending backward, with a first branch (12a), until it wraps around the larger wall (6) of the intermediate covering element, at or close to the rear edge (10) of the latter; the second belt (12) extending forward, with a second branch (12b), from the larger wall (6) of the intermediate covering element to the point where its second end is fixed to the larger wall (6) of the front covering element, close to the rear edge (10) of the latter.

14. The device according to claim 13, **characterised in that** the first branch (12a) of each second belt (12) extends inside the hollow space formed by the rear covering element and the intermediate covering element, whilst the second branch (12b) extends inside the intermediate covering element.

15. The device according to any of the claims from 1 to 4, **characterised in that** the set of covering elements (21a - 21d) forms two covering and protective mantles (31) which are connected to one another in a symmetrical bridge configuration, meaning that the shortening of one mantle (31) causes complementary extension of the other mantle (31) and vice versa.

16. The device according to claim 15, wherein each covering element (21a - 21d) comprises a flat covering panel (23a - 23d); the flat covering panels (23a - 23d) being slidably connected to one another, overlapping one another, as a whole forming the covering and protective mantles (31).

17. The device according to claim 16, **characterised in that,** in the set of three consecutive covering elements (21a - 21d), fixed to the rear covering element, at or close to the relative front profile (28), is the first end of at least one belt (32), extending forward, with a first branch (32a), until it wraps around the intermediate covering element, close to the front profile (28) of the latter; the belt (32) extending backward, with a second branch (32b), from the intermediate covering element to the point where its second end is fixed to the front covering element, at or close to the rear profile (29) of the latter.

18. The device according to any of the claims from 1 to 4, wherein a set of covering elements (36a - 36d) forms two covering and protective mantles (43) which are connected to one another in a symmetrical bridge configuration, meaning that the shortening of one mantle (43) causes complementary extension of the other mantle (43) and vice versa; the covering elements (36a - 36d) comprising respective flat covering panels (38a - 38d) being slidably connected to one another, overlapping one another, as a whole forming the covering and protective mantles (43); the set of overlapping flat covering panels (38a - 38d) is delimited, in the overlapping direction, by a lower flat covering panel (38a) and an upper flat covering panel (38d); the upper flat covering panel (38d) supporting, along the perimeter of its central opening (37d), a device according to any of the claims from 15 to 17; it being possible to angle the latter so that the direction of extension and shortening of its covering and protective mantles (31) is at a right angle to the direction of movement of the upper flat covering panel (38d).

19. The device according to any of the foregoing claims from 1 to 18, **characterised in that** it comprises tensioning means (47, 52, 55) for the belts (11), designed to keep the belts (11) taut during operation.

## Patentansprüche

1. Abdeck- und Schutzvorrichtung für Maschinen und Systeme, enthaltend wenigstens einen Satz von Abdeckelementen (2a-2e; 21a-21d, 36a-36d, 45a-45c), die eins nach dem anderen gleitbar miteinander verbunden sind, um wenigstens einen Abdeck- und Schutzmantel (3; 31; 43) zu bilden, welcher in einer bestimmten Richtung (D; D1, D2) ausgefahren und zurückgezogen werden kann, und bei welcher jedes Abdeckelement (2a-2e; 21a-21d, 36a-36d, 45a-45c) unter Bezugnahme auf die Ausfahrrichtung (V2) des Mantels (3; 31, 43) ein vorderes Profil (9; 28; 41) und ein hinteres Profil (10; 29; 42) aufweist; wobei die Vorrichtung (1; 18; 35) **dadurch gekennzeichnet ist, dass** in einem Satz von drei aufeinanderfolgenden Abdeckelementen (2a-2e; 21a-21d, 36a-36d, 45a-45c) das hintere Abdeckelement an oder dicht an seinem vorderen Profil (9; 28; 41) und das vordere Abdeckelement an oder dicht an seinem hinteren Profil (10; 29; 42) durch flexible Verbindungselemente (11, 12; 32; 44) miteinander verbunden sind, welche sich um das zwischenliegende Abdeckelement an oder wenigstens dicht an einem Profil (9, 10; 28; 41) von letzterem legen.

2. Vorrichtung nach Patentanspruch 1, **dadurch gekennzeichnet, dass** in einem Satz von drei aufeinanderfolgenden Abdeckelementen (2a-2e; 21a-21d, 36a-36d, 45a-45c) das vordere Profil (9; 28; 41) des hinteren Abdeckelementes und das hintere Profil (10; 29; 42) des vorderen Abdeckelementes durch erste flexible Verbindungselemente (11; 32; 44) miteinander verbunden sind, welche sich um das zwischenliegende Abdeckelement an oder dicht an dem vorderen Profil (9, 10; 28; 41) von letzterem legen.

3. Vorrichtung nach Patentanspruch 2, **dadurch gekennzeichnet, dass** die ersten flexiblen Verbindungselemente (11; 32; 44) aus wenigstens einem ersten Gurt (11; 32; 44) bestehen, von welchem ein Ende an dem vorderen Profil (9; 28; 41) des hinteren Abdeckelementes befestigt ist, wobei das andere Ende an dem hinteren Profil (10; 29; 42) des vorderen Abdeckelementes befestigt ist.

4. Vorrichtung nach Patentanspruch 2 oder 3, **dadurch gekennzeichnet, dass** die ersten flexiblen Verbindungsmittel (11; 32; 44) sich um wenigstens ein erstes Rücklaufelement (13; 33) legen, montiert an dem zwischenliegenden Abdeckelement an oder dicht an dem vorderen Profil (9; 28; 41) von letzterem.

5. Vorrichtung nach einem beliebigen der Patentansprüche von 1 bis 4, **dadurch gekennzeichnet, dass** in einem Satz von drei aufeinanderfolgenden Abdeckelementen (2a-2e) das vordere Profil (9) des hinteren Abdeckelementes und das hintere Profil (10) des vorderen Abdeckelementes durch zweite flexible Verbindungsmittel (12) miteinander verbunden sind, die sich um das zwischenliegende Abdeckelement an oder dicht an dem hinteren Profil (10) von letzterem legen.

6. Vorrichtung nach Patentanspruch 5, **dadurch gekennzeichnet, dass** die zweiten flexiblen Verbindungsmittel (12) aus wenigstens einem zweiten Gurt (12) bestehen, von welchem ein Ende an dem vorderen Profil (9) des hinteren Abdeckelementes befestigt ist, wobei das andere Ende an dem hinteren Profil (10) des vorderen Abdeckelementes befestigt ist.

7. Vorrichtung nach Patentanspruch 5 oder 6, **dadurch gekennzeichnet, dass** die zweiten flexiblen Verbindungsmittel (12) sich um wenigstens ein zweites Rücklaufelement (15) legen, montiert an dem zwischenliegenden Abdeckelement an oder dicht an dem hinteren Profil (10) von letzterem.

8. Vorrichtung nach einem beliebigen der Patentansprüche von 1 bis 7, **dadurch gekennzeichnet, dass** sie eine Anzahl von ersten Abdeckelementen (2a-2e) enthält, gleitbar eins nach dem anderen miteinander verbunden, um einen ersten Abdeck- und Schutzmantel (3) zu bilden, und eine Anzahl von zweiten Abdeckelementen (2a-2e), gleitbar eins nach dem anderen miteinander verbunden, um einen zweiten Abdeck- und Schutzmantel (3) zu bilden; wobei die ersten und zweiten Mäntel (3, 3) in einer symmetrischen Brückenkonfiguration miteinander verbunden sind, in welcher jedes bewegliche Abdeckelement (2b-2e) des ersten Mantels (3) fest mit dem entsprechenden beweglichen Abdeckelement (2b-2e) des anderen Mantels (3) verbunden ist, so dass das Zurückziehen eines Mantels (3) das ergänzende Ausfahren des anderen Mantels (3) bewirkt und umgekehrt.

9. Vorrichtung nach einem beliebigen der Patentansprüche von 1 bis 8, bei welcher jedes Abdeckelement (2a-2e) ein kastenförmiges Element (2a-2e) ist, das eine im wesentlichen rohrförmige Ausbildung hat und eine breitere Wand (6) und zwei Seiten (7) enthält, welche sich von der breiteren Wand (6) aus auf solche Weise erstrecken, dass sie zusammen ein U bilden; wobei die kastenförmigen Elemente (2a-2e) auf solche Weise miteinander verbunden sind, dass sie in einer teleskopischen Konfiguration eins in das andere gleiten, um den Abdeck- und Schutzmantel (3) zu bilden, welcher in der vorgegebenen Richtung (D) ausgefahren und zurückgezogen werden kann, wobei jedes kastenförmige Element (2a-2e) unter Bezugnahme auf die Ausfahrrichtung (V2) des Mantels (3) durch eine vordere Kante (9) abgegrenzt ist, welche das vordere Profil (9) bildet, und durch eine hintere Kante (10), welche das hintere Profil (10) bildet.

10. Vorrichtung nach Patentanspruch 9, **dadurch gekennzeichnet, dass** bei dem Satz von drei aufeinanderfolgenden Abdeckelementen (2a-2e) an jeder der beiden Seiten (7) des hinteren Abdeckelementes und dicht an der entsprechenden vorderen Kante (9) das erste Ende von wenigstens einem ersten Gurt (11) befestigt ist, der sich mit einem ersten Abschnitt (11a) nach vorn erstreckt, bis er sich um die entsprechende Seite (7) des zwischenliegenden Abdeckelementes legt, und zwar an oder dicht an der vorderen Kante (9) von letzterem; wobei sich der erste Gurt (11) mit einem zweiten Abschnitt (11b) von der Seite (7) des zwischenliegenden Abdeckelementes aus bis zu dem Punkt nach hinten erstreckt, wo dessen zweites Ende an der entsprechenden Seite (7) des vorderen Abdeckelementes befestigt ist, und zwar dicht an der hinteren Kante (10) von letzterem.

11. Vorrichtung nach Patentanspruch 10, **dadurch gekennzeichnet, dass** der erste Abschnitt (11a) eines jeden ersten Gurtes (11) ausserhalb des zwischenliegenden Abdeckelementes verläuft, während sich der zweite Abschnitt (11b) im Inneren des Hohlraums erstreckt, der durch das zwischenliegende Abdeckelement und dem vorderen Abdeckelement gebildet wird.

12. Vorrichtung nach Patentanspruch 11, **dadurch gekennzeichnet, dass** jeder erste Abschnitt (11a) durch einen jeweiligen Kanal (17) geschützt ist, befestigt an einer Seite (7) eines Abdeckelementes.

13. Vorrichtung nach Patentanspruch 9, **dadurch gekennzeichnet, dass** bei dem Satz von drei aufeinanderfolgenden Abdeckelementen (2a-2e) an der breiteren Wand (6) des hinteren Abdeckelementes, dicht an der entsprechenden vorderen Kante (9), das erste Ende von wenigstens einem zweiten Gurt (12) befestigt ist, der sich mit einem ersten Abschnitt (12a) nach hinten erstreckt, bis er sich um die breitere Wand (6) des zwischenliegenden Abdeckelementes legt, und zwar an oder dicht an der hinteren Kante (10) von letzterem; wobei sich der zweite Gurt (12) mit einem zweiten Abschnitt (12b) von der breiteren Wand (6) des zwischenliegenden Abdeckelementes aus bis zu dem Punkt nach vorn erstreckt, wo dessen zweites Ende an der breiteren Wand (6) des vorderen Abdeckelementes befestigt ist, und zwar dicht an der hinteren Kante (10) von letzterem.

14. Vorrichtung nach Patentanspruch 13, **dadurch gekennzeichnet, dass** der erste Abschnitt (12a) eines jeden zweiten Gurtes (12) sich im Inneren des Hohlraums erstreckt, gebildet durch das hintere Abdeckelement und das zwischenliegende Abdeckelement, während der zweite Abschnitt (12b) sich im Inneren des zwischenliegenden Abdeckelementes erstreckt.

15. Vorrichtung nach einem beliebigen der Patentansprüche von 1 bis 4, **dadurch gekennzeichnet, dass** der Satz von Abdeckelementen (21a-21d) zwei Abdeck- und Schutzmäntel (31) bildet, welche in einer symmetrischen Brückenkonfiguration miteinander verbunden sind, was bedeutet, dass das Zurückziehen eines Mantels (31) das ergänzende Ausfahren des anderen Mantels (31) bewirkt und umgekehrt.

16. Vorrichtung nach Patentanspruch 15, bei welcher jedes Abdeckelement (21a-21d) ein flaches Abdeckpaneel (23a-23d) aufweist; wobei die flachen Abdeckpaneele (23a-23d) gleitbar und einander überlappend miteinander verbunden sind, wobei sie insgesamt die Abdeck- und Schutzmäntel (31) bilden.

17. Vorrichtung nach Patentanspruch 16, **dadurch gekennzeichnet, dass** bei dem Satz von drei aufeinanderfolgenden Abdeckelementen (21a-21d) an dem hinteren Abdeckelement an oder dicht an dem entsprechenden vorderen Profil (28) das erste Ende von wenigstens einem Gurt (32) befestigt ist, der sich mit einem ersten Abschnitt (32a) nach vorn erstreckt, bis es sich um das zwischenliegende Abdeckelement legt, und zwar dicht an dem vorderen Profil (28) von letzterem; wobei sich der Gurt (32) mit einem zweiten Abschnitt (32b) von dem zwischenliegenden Abdeckelement aus bis zu einem Punkt nach hinten erstreckt, wo dessen zweites Ende an dem vorderen Abdeckelement befestigt ist, und zwar an oder dicht an dem hinteren Profil (29) von letzterem.

18. Vorrichtung nach einem beliebigen der Patentansprüche von 1 bis 4, bei welcher ein Satz von drei Abdeckelementen (36a-36d) zwei Abdeck- und Schutzmäntel (43) bildet, welche in einer symmetrischen Brückenkonfiguration miteinander verbunden sind, was bedeutet, dass das Zurückziehen von einem Mantel (43) das ergänzende Ausfahren des anderen Mantels (43) bewirkt und umgekehrt; wobei die Abdeckelemente (36a-36d) jeweilige flache Abdeckpaneele (38a-38d) aufweisen, die gleitbar und einander überlappend miteinander verbunden sind, wobei sie insgesamt die Abdeck- und Schutzmäntel (43) bilden; wobei der Satz von überlappenden flachen Abdeckpaneelen (38a-38d) in Überlappungsrichtung durch ein unteres flaches Abdeckpaneel (38a) und durch ein oberes flaches Abdeckpaneel (38d) begrenzt wird; wobei das obere flache Abdeckpaneel (38d) entlang dem Umlauf seiner mittleren Öffnung (37d) eine Vorrichtung nach einem beliebigen der Patentansprüche von 15 bis 17 trägt; und wobei es möglich ist, letztere so anzuwinkeln, dass die Ausfahr- und Rückzugrichtung der Abdeck- und Schutzmäntel (43) in einem rechten Winkel zu der Bewegungsrichtung des oberen flachen Abdeckpaneels (38d) verläuft.

19. Vorrichtung nach einem beliebigen der vorstehenden Patentansprüche von 1 bis 18, **dadurch gekennzeichnet, dass** sie Spannmittel (47, 52, 55) für die Bänder (11) enthält, dazu bestimmt, die Bänder (11) während des Betriebes gespannt zu halten.

## Revendications

1. Un dispositif de recouvrement et de protection pour machines et systèmes, comprenant au moins une série d'éléments de couverture (2a - 2e ; 21a - 21d ; 36a - 36d, 45a - 45c) reliés entre eux de façon coulissante, l'un à la suite de l'autre, pour former au moins un manteau (3; 31; 43) de recouvrement et de protection qui peut être étendu et rétracté dans une direction prédéfinie (D ; D1, D2) où chaque élément de couverture (2a - 2e ; 21a - 21d ; 36a - 36d, 45a - 45c), en se référant à la direction d'extension (V2) du manteau (3 ; 31 ; 43), présente un profil avant (9 ; 28 ; 41) et un profil arrière (10 ; 29 ; 42) ; le dispositif (1 ; 18 ; 35) étant **caractérisé en ce que**, dans une série de trois éléments de couverture consécutifs (2a - 2e ; 21a - 21d ; 36a - 36d, 45a - 45c), l'élément de couverture arrière, au niveau ou à proximité de son profil avant (9 ; 28 ; 41), et l'élément de couverture avant, au niveau ou à proximité de son profil arrière (10 ; 29 ; 42), sont reliés par des moyens d'accouplement flexibles (11, 12 ; 32; 44) qui s'enroulent autour de l'élément de couverture intermédiaire au niveau ou à proximité d'au moins un profil (9, 10 ; 28 ; 41) de ce dernier.

2. Le dispositif selon la revendication 1, **caractérisé en ce que**, dans une série de trois éléments de couverture consécutifs (2a - 2e ; 21a - 21d ; 36a - 36d, 45a - 45c), le profil avant (9 ; 28 ; 41) de l'élément de couverture arrière et le profil arrière (10 ; 29 ; 42) de l'élément de couverture avant sont reliés par des premiers moyens d'accouplement flexibles (11 ; 32 ; 44) qui s'enroulent autour de l'élément de couverture intermédiaire au niveau ou à proximité du profil avant (9; 28 ; 41) de ce dernier.

3. Le dispositif selon la revendication 2, **caractérisé en ce que** les premiers moyens d'accouplement flexibles (11; 32; 44) consistent en au moins une première courroie (11; 32; 44) dont une extrémité est fixée au profil avant (9; 28; 41) de l'élément de couverture arrière et l'autre extrémité est fixée au profil arrière (10 ; 29 ; 42) de l'élément de couverture avant.

4. Le dispositif selon la revendication 2 ou 3, **caractérisé en ce que** les premiers moyens d'accouplement flexibles (11 ; 32 ; 44) s'enroulent autour d'au moins un premier élément de renvoi (13 ; 33) monté sur l'élément de couverture intermédiaire au niveau ou à proximité du profil avant (9 ; 28 ; 41) de ce dernier.

5. Le dispositif selon l'une quelconque des revendications de 1 à 4, **caractérisé en ce que**, dans une série de trois éléments de couverture consécutifs (2a - 2e), le profil avant (9) de l'élément de couverture arrière et le profil arrière (10) de l'élément de couverture avant sont reliés par des deuxièmes moyens d'accouplement flexibles (12) qui s'enroulent autour de l'élément de couverture intermédiaire au niveau ou à proximité du profil arrière (10) de ce dernier.

6. Le dispositif selon la revendication 5, **caractérisé en ce que** les deuxièmes moyens d'accouplement flexibles (12) consistent en au moins une deuxième courroie (12) dont une extrémité est fixée au profil avant (9) de l'élément de couverture arrière et l'autre extrémité est fixée au profil arrière (10) de l'élément de couverture avant.

7. Le dispositif selon la revendication 5 ou 6, **caractérisé en ce que** les deuxièmes moyens d'accouplement flexibles (12) s'enroulent autour d'au moins un deuxième élément de renvoi (15) monté sur l'élément de couverture intermédiaire au niveau ou à proximité du profil arrière (10) de ce dernier.

8. Le dispositif selon l'une quelconque des revendications de 1 à 7, **caractérisé en ce qu'**il comprend une pluralité de premiers éléments de couverture (2a - 2e) reliés entre eux de façon coulissante, l'un à la suite de l'autre, pour former un premier manteau de recouvrement et de protection (3), et une pluralité de deuxièmes éléments de couverture (2a - 2e) reliés entre eux de façon coulissante, l'un à la suite de l'autre, pour former un deuxième manteau de recouvrement et de protection (3) ; le premier et le deuxième manteaux (3, 3) étant reliés entre eux selon une configuration en pont symétrique dans laquelle chaque élément de couverture mobile (2b - 2e) du premier manteau (3) est solidaire de l'élément de couverture mobile (2b - 2e) correspondant de l'autre manteau (3), de telle sorte que la rétraction d'un manteau (3) détermine l'extension complémentaire de l'autre manteau (3) et inversement.

9. Le dispositif f selon l'une quelconque des revendications de 1 à 8, **caractérisé en ce que** chaque élément de couverture (2a - 2e) est un élément en caisson (2a - 2e) ayant une forme essentiellement tubulaire et comprenant une grande paroi (6) et deux côtés (7) qui s'étendent à partir de la grande paroi (6) de manière à former ensemble un « U » ; les éléments en caisson (2a - 2e) étant reliés entre eux de manière à pouvoir coulisser, l'un à l'intérieur de l'autre selon une configuration télescopique, afin de former le manteau de recouvrement et de protection (3) qui peut être étendu et rétracté dans la direction prédéfinie (D) où chaque élément en caisson (2a - 2e), en se référant à la direction d'extension (V2) du manteau (3), est délimité par un bord avant (9) définissant le profil avant (9) et par un bord arrière (10) définissant le profil arrière (10).

10. Le dispositif selon la revendication 9, **caractérisé en ce que**, dans la série de trois éléments de couverture consécutifs (2a - 2e), est fixée à chacun des deux côtés (7) de l'élément de couverture arrière, à proximité du bord avant (9) correspondant, la première extrémité d'au moins une première courroie (11) qui s'étend vers l'avant, sous forme d'une première branche (11a), jusqu'à s'enrouler autour du côté (7) correspondant de l'élément de couverture intermédiaire, au niveau ou à proximité du bord avant (9) de ce dernier ; la première courroie (11) s'étendant vers l'arrière, sous forme d'une deuxième branche (11b), à partir du côté (7) de l'élément de couverture intermédiaire jusqu'au point où sa deuxième extrémité est fixée au côté (7) correspondant de l'élément de couverture avant, à proximité du bord arrière (10) de ce dernier.

11. Le dispositif selon la revendication 10, **caractérisé en ce que** la première branche (11a) de chaque première courroie (11) s'étend à l'extérieur de l'élément de couverture intermédiaire, tandis que la deuxième branche (11b) s'étend à l'intérieur de l'espace vide formé par l'élément de couverture intermédiaire et l'élément de couverture avant.

12. Le dispositif selon la revendication 11, **caractérisé en ce que** chaque première branche (11a) est protégée par un habillage (17) respective fixée à un côté (7) d'un élément de couverture.

13. Le dispositif selon la revendication 9, **caractérisé en ce que**, dans la série de trois éléments de couverture consécutifs (2a - 2e), est fixée à la grande paroi (6) de l'élément de couverture arrière, à proximité du bord avant (9) correspondant, la première extrémité d'au moins une deuxième courroie (12) qui s'étend vers l'arrière, sous forme d'une première branche (12a), jusqu'à s'enrouler autour de la grande paroi (6) de l'élément de couverture intermédiaire, au niveau ou à proximité du bord arrière (10) de ce dernier ; la deuxième courroie (12) s'étendant vers l'avant, sous forme d'une deuxième branche (12b), à partir de la grande paroi (6) de l'élément de couverture intermédiaire jusqu'au point où sa deuxième extrémité est fixée à la grande paroi (6) de l'élément de couverture avant, à proximité du bord arrière (10) de ce dernier.

14. Le dispositif selon la revendication 13, **caractérisé en ce que** la première branche (12a) de chaque deuxième courroie (12) s'étend à l'intérieur de l'espace vide formé par l'élément de couverture arrière et l'élément de couverture intermédiaire, tandis que la deuxième branche (12b) s'étend à l'intérieur de l'élément de couverture intermédiaire.

15. Le dispositif selon l'une quelconque des revendications de 1 à 4, **caractérisé en ce que** la série d'éléments de couverture (21a - 21d) définit deux manteaux de recouvrement et de protection (31) qui sont reliés entre eux selon une configuration en pont symétrique, ce qui signifie que la rétraction d'un manteau (31) détermine l'extension complémentaire de l'autre manteau (31) et inversement.

16. Le dispositif selon la revendication 15, **caractérisé en ce que** chaque élément de couverture (21a - 21d) comprend un panneau plat de couverture (23a - 23d) ; les panneaux plats de couverture (23a - 23d) étant reliés entre eux de façon coulissante, superposés entre eux, pour former dans leur ensemble les manteaux de recouvrement et de protection (31).

17. Le dispositif selon la revendication 16, **caractérisé en ce que**, dans la série de trois éléments de couverture consécutifs (21a - 21d), est fixée à l'élément de couverture arrière, au niveau ou à proximité du profil avant (28) correspondant, la première extrémité d'au moins une courroie (32) qui s'étend vers l'avant, sous forme d'une première branche (32a), jusqu'à s'enrouler autour de l'élément de couverture intermédiaire, à proximité du profil avant (28) de ce dernier ; la courroie (32) s'étendant vers l'arrière, sous forme d'une deuxième branche (32b), à partir de l'élément de couverture intermédiaire jusqu'au point où sa deuxième extrémité est fixée à l'élément de couverture avant, au niveau ou à proximité du profil arrière (29) de ce dernier.

18. Le dispositif selon l'une quelconque des revendications de 1 à 4, **caractérisé en ce qu'**une série d'éléments de couverture (36a - 36d) définit deux manteaux de recouvrement et de protection (43) qui sont reliés entre eux selon une configuration en pont symétrique, ce qui signifie que la rétraction d'un manteau (43) détermine l'extension complémentaire de l'autre manteau (43) et inversement ; les éléments de couverture (36a - 36d) comprenant des panneaux plats de couverture (38a - 38d) respectifs reliés entre eux de façon coulissante, superposés entre eux, pour former dans leur ensemble les manteaux de recouvrement et de protection (43); la série de panneaux plats de couverture superposés (38a - 38d) est délimitée, dans la direction de superposition, par un panneau plat de couverture inférieur (38a) et un panneau plat de couverture supérieur (38d); le panneau plat de couverture supérieur (38d) supportant, le long du pourtour de son ouverture centrale (37d), un dispositif selon l'une quelconque des revendications de 15 à 17 ; ce dernier pouvant être orienté afin que la direction d'extension et de rétraction de ses manteaux de recouvrement et de protection (43) soit perpendiculaire à la direction de mouvement du panneau plat de couverture supérieur (38d).

19. Le dispositif selon l'une quelconque des revendications précédentes de 1 à 18, **caractérisé en ce qu'**il comprend des moyens tendeurs (47, 52, 55) pour les courroies (11), destinés à maintenir lesdites courroies (11) tendues durant le fonctionnement.
